# EUROPÄISCHE PATENTANMELDUNG

(11) **EP 1 453 182 A2**
(43) Veröffentlichungstag der Anmeldung: **01.09.2004**
(21) Anmeldenummer: 03021079.3
(22) Anmeldetag: 18.09.2003
(51) Int. Cl.: H02K 5/14, H02K 7/116

(54) **Getriebegehäuse aus Kunststoff mit integriertem Bürstenträger**

(30) Priorität: 26.02.2003 DE 10308145
(71) Anmelder: ROBERT BOSCH GMBH, 70442 Stuttgart (DE)
(72) Erfinder: Steuer, Peter, 76149 Karlsruhe (DE); Reichmann, Siegfried, 77866 Rheinau Freistett (DE)

(57) **Zusammenfassung**

Die Erfindung bezieht sich auf einen Verstellantrieb mit einem Getriebegehäuse (2, 3; 20) aus einem Kunststoffmaterial. Durch das Getriebegehäuse (2, 3; 20) erstreckt sich eine Ankerwelle (4), auf welcher ein Kommutator (5) aufgenommen ist. Dem Kommutator (5) sind in einer Bürstenträgeranordnung ( 22, 31) aufgenommene Bürsten (9) zugeordnet. Die die Bürsten (9) aufnehmende Bürstenträgeranordnung (22, 31) und das Getriebegehäuse 20 sind einteilig aus Kunststoffmaterial ausgebildet.

## Beschreibung

### Technisches Gebiet

Bei der Entwicklung von Stellantrieben zur Anwendung im Automobilbereich wird angestrebt, möglichst kompaktbauende Stellantriebe zu erreichen. Die den elektrischen Stellantrieb ansteuernde Elektronik sowie auch Elektronikkomponenten für andere Funktionen, die nicht unmittelbar den Stellantrieb betreffen, werden in das Gehäuse, welches den mechanischen Teil des Stellantriebes aufnimmt, integriert. In das Getriebegehäuse werden neben der Elektronik zur Ansteuerung des elektrischen Stellantriebes auch die mechanischen Komponenten, d. h. zum Beispiel ein Schneckengetriebe oder dergleichen und der das Getriebe antreibende elektrische Antrieb integriert.

### Stand der Technik

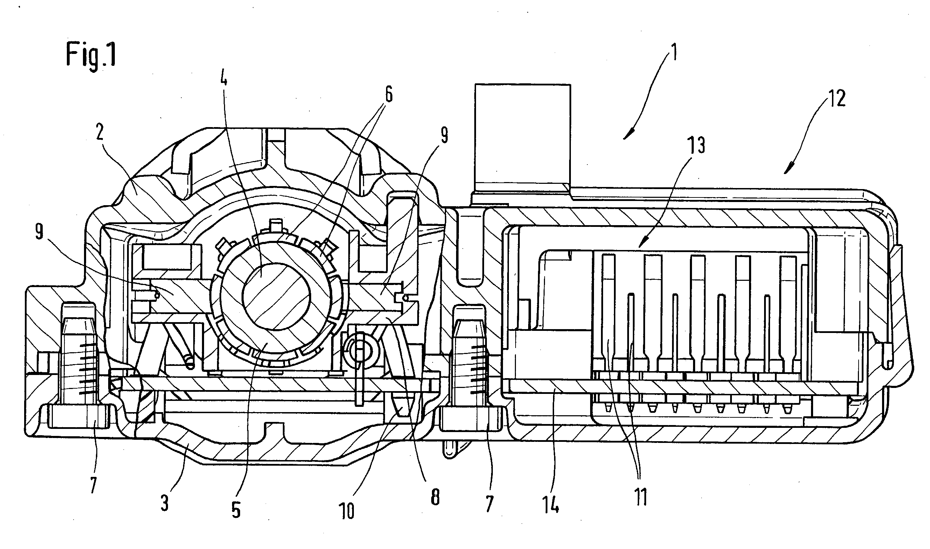

Aus dem Stande der Technik sind Kunststoffgetriebegehäuse für elektrische Stellantriebe bekannt, bei denen der Bürstenträger für den elektrischen Antrieb als ein separates Bauteil entweder in das Polgehäuse integriert ist oder wie aus der Darstellung gemäß Fig. 1 hervorgeht, auf einer Leiterplatte montiert ist. Bei der Integration des Bürstenträgers als separates Bauteil auf die Leiterplatte ist ein separates Werkzeug für den Bürstenträger erforderlich. Ferner macht die Anordnung des Bürstenträgers auf der Leiterplatte zumindest einen zusätzlichen Montageschritt erforderlich.

Da es sich bei einem als separates Bauteil ausgebildeten Bürstenträger um ein zusätzliches Bauteil handelt, entstehen zusätzliche Schnittstellen, welche die Toleranzkette hinsichtlich einer Positionstoleranz zwischen dem Bürstenträger und den darin mit geringem Spiel aufzunehmenden Kohlenbürsten vergrößern. Es wird generell angestrebt, die Bürsten innerhalb des Bürstenträgers hochgenau gegenüber den einzelnen, voneinander getrennten Kommutatorlamellen anzuordnen. Weitere in der Toleranzkette vorhandene zusätzliche Schnittstellen wirken sich negativ auf die Positionierung der Kohlenbürsten relativ zum an einer Welle des elektrischen Antriebes angeordneten Kommutator 5 aus.

### Darstellung der Erfindung

Gemäß der vorgeschlagenen Lösung lässt sich ein Bürstenträger unmittelbar in das Getriebegehäuse integrieren. Der Bürstenträger wird im gleichen Spritzprozess wie das Getriebegehäuse gefertigt. Aufgrund der Integration des Bürstenträgers in das Getriebegehäuse aus Kunststoffmaterial eines elektrischen Verstellantriebes, lässt sich eine sehr genaue Platzierung der im Bürstenträger aufgenommenen Kohlebürsten relativ zum rotierenden Kommutator erzielen. Dies hat den Vorteil, dass sich mit den erfindungsgemäß vorgeschlagenen Bürstenträgeranordnungen das durch den Kommutator und die auf dessen Kommutatorlamellen angestellten Bürsten erzeugte Geräusch erheblich reduzieren lässt, des weiteren ist keine zusätzliche Fixierung der Bürstenträgeranordnung erforderlich, um dieses innerhalb des Getriebegehäuses zu stabilisieren.

In einer Ausführungsvariante können die Kohlebürsten des elektrischen Antriebes in eine Kunststoffummantelung eingelassen sein, die ihrerseits den auf dem Anker des elektrischen Antriebes befindlichen Kommutator sowie gegebenenfalls einen dort angeordneten Ringmagneten umschließt, so dass eine staubunempfindliche Konstruktion realisiert werden kann. Die Ummantelung der Kohlebürsten bietet einen Schutz gegen mechanische Beschädigungen. Besteht das Erfordernis, auch das Drehzahlsignal des Ankers des elektrischen Antriebes über den Ringmagneten so erfassen, lassen sich über Aussparungen im Kunststoffgetriebegehäuse Sensoren, wie zum Beispiel Hall-Sensoren, nahe an den Ringmagneten heranführen.

### Zeichnung

Anhand der Zeichnung wird die Erfindung nachstehend eingehender beschrieben.

Es zeigt:
- Figur 1: eine Getriebegehäuseausführung gemäß des Standes der Technik mit an einer im Getriebegehäuse angeordneten Leiterplatte angeklippstem Bürstenträger,
- Figur 2: einen Schnitt durch eine erste Ausführungsvariante einer erfindungsgemäßen Bürstenhalteranordnung,
- Figur 3: die Draufsicht auf die erfindungsgemäße erste Ausführungsvariante einer Bürstenträgeranordnung gemäß Fig. 2,
- Figur 4: einen Querschnitt durch eine zweite Ausführungsvariante einer erfindungsgemäßen Bürstenträgeranordnung,
- Figur 5: einen Querschnitt durch ein Kunststoffgetriebegehäuse im Bereich eines ummantelten Ringmagneten mit an einer Ummantelung aufgenommener Leiterplatte und
- Figur 6: eine Draufsicht auf einen elektrischen Antrieb mit Kommutator und mit umschlossenem Kommutator und umschlossenem Ringmagneten.

### Ausführungsvarianten

Der Darstellung gemäß Fig. 1 ist ein elektrischer Verstellantrieb 1 entnehmbar. Der beispielsweise als permanenterregter Motor ausgebildete elektrischer Antrieb ist innerhalb einer ersten Gehäusehälfte 2 sowie einer weiteren, zweiten Gehäusehälfte 3 aufgenommen. Der in Fig. 1 nicht näher dargestellte elektrische Antrieb umfasst eine Ankerwelle 4. An der Ankerwelle 4 ist ein Kommutator 5 aufgenommen, an dessen Außenumfangsflächen sich voneinander beabstandete Kommutatorlamellen 6 befinden. In der in Fig. 1 dargestellten Ausführungsvariante eines an der Ankerwelle 4 aufgenommenen Kommutators 5 umfasst dieser voneinander getrennte Kommutatorlamellen 6. Die erste Gehäusehälfte 2 und die zweite Gehäusehälfte 3 sind beispielsweise über Befestigungsschrauben 7 oder durch Anwendung einer sonstigen Verbindungstechnik wie Schweißen, Einclipsen oder Kleben miteinander verbunden. Ein Bürstenträger 8, welcher als separates Bauteil ausgebildet ist, nimmt zwei einander gegenüberliegend angeordnete Kohlebürsten 9 auf. Am Bürstenträger 8 befinden sich Montageclipse 10, mit welchen der Bürstenträger 8 in der in Fig. 1 dargestellten Ausführungsvariante an eine Leiterplatte 14 angeklippst ist.

Die erste Gehäusehälfte 2 sowie die zweite Gehäusehälfte 3 umfassen einen Elektronikteil 12, in welchen hier nicht detaillierter dargestellte Elektronikkomponenten 13 aufgenommen sind, die über Pins 11 mit der Leiterplatte 14 verbunden sind.

Nachteilig bei der in Fig. 1 dargestellten Ausführungsvariante ist der Umstand, dass der Bürstenträger 8 als separates Bauteil ausgebildet ist, was einen zusätzlichen Montageschritt und den Einsatz zusätzlicher Werkzeuge erforderlich macht.

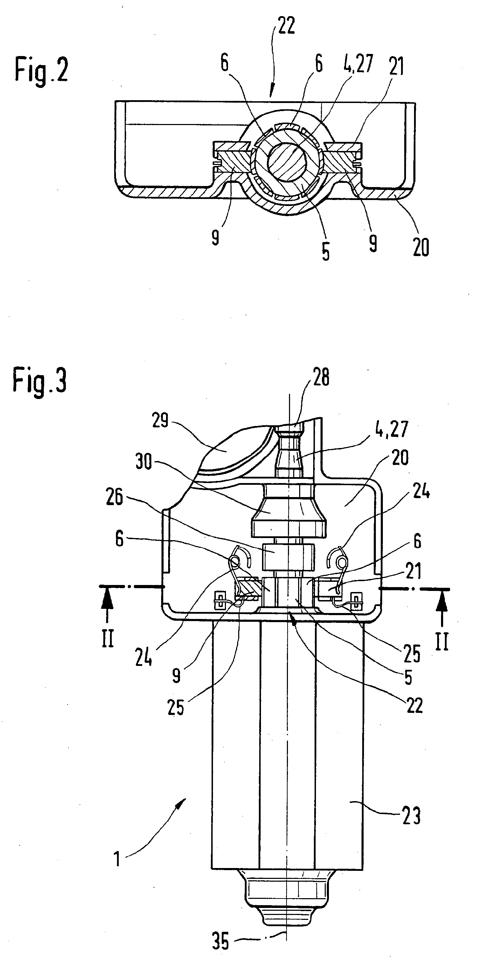

Fig. 2 zeigt einen Querschnitt durch eine erste Ausführungsvariante der erfindungsgemäß vorgeschlagenen Bürstenträgeranordnung für elektrische Antriebe.

Der Darstellung gemäß Fig. 2 ist entnehmbar, dass in ein Kunststoffgetriebegehäuse 20 eine offene Bürstenträgeranordnung 22 integriert ist. Die in Fig. 2 im Querschnitt dargestellte offene Bürstenträgeranordnung 22 umschließt den an der Ankerwelle 4, die eine Abtriebswelle 27 des in Fig. 2 nicht dargestellten elektrischen Antriebes darstellt, nur teilweise. Die offene Bürstenträgeranordnung 22 umfasst eine Bürstenführung 21. In die Bürstenführung 21 der offenen Bürstenträgeranordnung 22 sind einander gegenüberliegend Kohlebürsten 9 eingelassen, die an die Kommutatorlamellen 6 des an der Ankerwelle des elektrischen Antriebes aufgenommenen Kommutators 5 angestellt sind. Durch das gleichzeitige Fertigen des Kunststoffgetriebegehäuses 20 und der in Fig. 2 im Querschnitt dargestellten offenen Bürstenträgeranordnung 22 ist sichergestellt, dass die in der offenen Bürstenträganordnung 22 aufgenommenen Kohlebürsten 9 sehr genau und stabil in Bezug auf die Kommutatorlamellen 6 des Kommutators 5 platziert sind. Dies wirkt sich insbesondere in einer Verringerung des durch die offene Bürstenträgeranordnung 22 und den relativ zu diesem rotierenden Kommutator 5 erzeugte Geräusch aus. Ferner können Werkzeuge zur Montage des Bürstenträgers innerhalb des Kunststoffgetriebegehäuses 20 eingespart werden.

Der Darstellung gemäß Fig. 3 ist eine Draufsicht auf einen Verstellantrieb 1 mit teilweise dargestelltem Kunststoffgetriebegehäuse zu entnehmen.

Der Verstellantrieb 1 umfasst neben dem Kunststoffgetriebegehäuse 20 ein Polgehäuse 23, in welchem ein beispielsweise als permanenterregter Elektromotor ausgestalteter elektrischer Antrieb des Verstellantriebes 1 aufgenommen ist. Das Polgehäuse 23 ist symmetrisch zu einer Symmetrielinie 35 ausgeführt. Innerhalb des Polgehäuses 23 sind die Permanentmagneten sowie der Anker, samt Wicklung bzw. Wicklungspaketen aufgenommen. Das Polgehäuse 23 umfasst eine Lagerung, an welcher die Ankerwelle 4, die gleichzeitig die Abtriebswelle 27 des elektrischen Antriebes darstellt, drehbar aufgenommen ist. Des weiteren ist die Ankerwelle 4 (Abtriebswelle 27) an einer Lagerung 30 im Kunststoffgetriebegehäuse 20 drehbar aufgenommen. An der Ankerwelle 4 (Abtriebswelle 27) befindet sich optional ein Ringmagnet 26, der gegebenenfalls über diesem zugeordnete Hall-Sensoren abgetastet wird, wenn die Drehzahl des elektrischen Antriebes des Verstellantriebes 1 erfasst werden soll. Daneben befindet sich der in Fig. 2 im Querschnitt dargestellte Kommutator 5 drehfest auf der Ankerwelle 4.

Die offene Bürstenträgeranordnung 22, welche die an die Kommutatorlamellen 6 des Kommutators 5 anzustellenden Kohlebürsten 9 aufnimmt, umfasst zwei die den Kommutatorlamellen 6 gegenüberliegenden Enden der Kohlebürste 9 beaufschlagende Schenkelfedem 24. Mittels der Schenkelfedern 24, die mit einem Ende in die Bürstenführung 21 der offenen Bürstenträgeranordnung 22 eingreifen, werden die Kohlebürsten 9 an die voneinander beabstandeten Kommutatorlamellen 6 des Kommutators 5 angestellt.

Die elektrische Verbindung des Kommutators 5 zur nicht dargestellten Ankerwicklung erfolgt über die Kohlebürsten 9. Die elektrische Verbindung nach außen erfolgt zum Beispiel über eine als Kohleseil 25 ausgebildete elektrisch leitende Verbindung. Über dem Ringmagneten 26 gegebenenfalls zuzuordnende Hall-Sensoren kann eine Drehzahlerfassung der Ankerwelle 4 (Abtriebswelle 27) des elektrischen Antriebes erfolgen, was hinsichtlich einer Auswertung der Schließkraftbegrenzung sowie einer Positionserfassung der Abtriebswelle des Verstellantriebes 1 von Vorteil sein kann.

Das Polgehäuse 23 ist mit dem Kunststoffgetriebegehäuse 20 beispielsweise über Schrauben fest verbunden. Die Ankerwelle 4, die abtriebsseitig in die Abtriebswelle 27 übergeht, umfasst eine Schnecke 28, die ihrerseits mit einem als Schneckenrad 29 ausgebildeten Getriebeelement zusammenwirkt. Damit wird das durch den elektrischen Antrieb des Verstellantriebes 1 erzeugte Drehmoment nach außen übertragen, so zum Beispiel zum Antrieb eines elektrischen Fensterhebers oder zum Antrieb einer Schiebedachanordnung in einem Kraftfahrzeug.

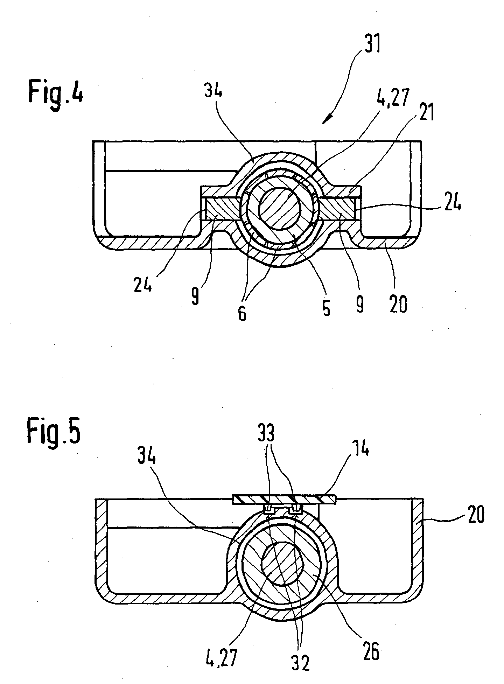

Fig. 4 ist ein Querschnitt durch eine weitere Ausführungsvariante einer erfindungsgemäß vorgeschlagenen Bürstenhalteranordnung zu entnehmen.

Der in Fig. 4 dargestellten Schnittdarstellung ist entnehmbar, dass an das Kunststoffgetriebegehäuse 20 eine geschlossene Bürstenträgeranordnung 31 angespritzt ist. Im Gegensatz zu der Darstellung der ersten Ausführungsvariante, d. h. der offenen Bürstenträgeranordnung 22 gemäß der Schnittdarstellung in Fig. 2, umschließt die geschlossene Bürstenträgeranordnung 31 den an der Ankerwelle 4 (Abtriebswelle 27) aufgenommenen Kommutator 5 mit einer geschlossenen Kunststoffummantelung 34. Die Kunststoffummantelung 34 bildet einerseits die Bürstenführung 21 gemäß dieser Ausführungsvariante. Die die Kohlebürsten 9 beaufschlagenden Schenkelfedern 24 sind in der Schnittdarstellung gemäß Fig. 4 punktförmig angedeutet. Die Kohlebürsten 9, die um 180° einander gegenüberliegend in der geschlossenen Bürstenträgeranordnung 31 aufgenommen sind, sind an den Kommutator 5 angestellt. In die geschlossene Bürstenträgeranordnung 31 können anstelle von zwei Kohlebürsten 9, die einander gegenüberliegend angeordnet werden, drei oder vier Kohlebürsten entsprechend den jeweiligen Erfordernissen eingelassen sein, die zueinander in einem Winkel von 120° bzw. 90° angeordnet sind.

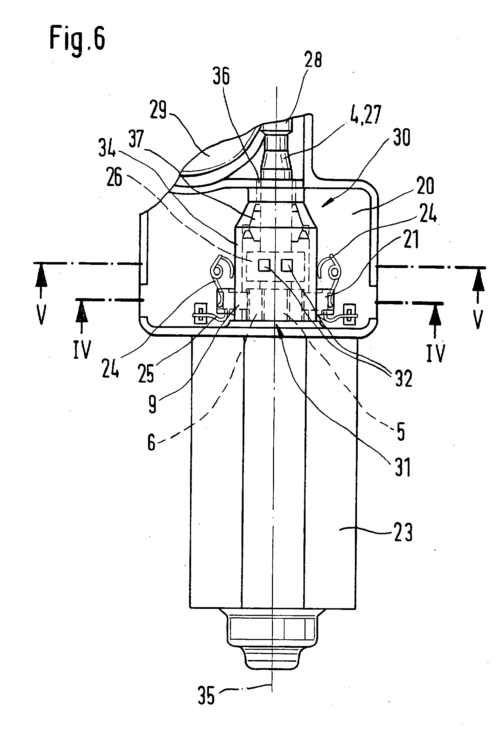

Die geschlossene Bürstenträgeranordnung 31 gemäß der Schnittdarstellung in Fig. 4 wird im gleichen Spritzgießprozess hergestellt, wie das Kunststoffgetriebegehäuse 20. Das Kunststoffgetriebegehäuse 20 und die geschlossene Bürstenträgeranordnung 31 bilden ein Bauteil. In der Ummantelung 34 kann die Lagerung 30 ausgebildet werden. Ferner umschließt die Kunststoffummantelung 34 den Ringmagneten 26 (vergleiche Fig. 5 und 6).

Durch die Kunststoffummantelung 34 der geschlossenen Bürstenträgeranordnung 31 kann eine staubunempfindliche Kapselung eines Kommutators 5, eines Ringmagneten 26 sowie einer Lagerung 30 erreicht werden. Dies erlaubt es, Stellantriebe 1 herzustellen, die auch ohne einen zusätzlichen Gehäusedeckel ausgeliefert werden, da die Kunststoffummantelung 34 einen Schutz gegen mechanische Beschädigungen darstellt.

Fig. 5 ist ein Querschnitt durch ein Kunststoffgetriebegehäuse im Bereich eines auf der Ankerwelle des elektrischen Antriebes angeordneten Ringmagneten zu entnehmen.

Aus der Darstellung gemäß Fig. 5 geht hervor, dass der auf der Ankerwelle 4 (Abtriebswelle 27) aufgenommene Ringmagnet 26 ebenfalls von der in Fig. 4 bereits erwähnten Kunststoffummantelung 34 geschützt gegen mechanische Beschädigungen ummantelt ist. In die Kunststoffummantelung 34 sind gemäß der Darstellung in Fig. 5 mehrere Aussparungen 32 eingelassen. Die Aussparungen 32 können in einer der Anzahl der den Ringmagnet 26 abtastenden Hall-Sensoren 33 entsprechenden Anzahl angeordnet werden. Die Hall-Sensoren 33 stehen unmittelbar mit einer oberhalb der Kunststoffummantelung 34 angeordneten Leitplatte 14 in Verbindung. Über die mit der Leiterplatte 14 in Verbindung stehenden Hall-Sensoren 33 wird der Außenumfang des auf der Ankerwelle 4 (Abtriebswelle 27) befindlichen Ringmagneten 26 abgetastet. Die Information über die Drehlage des Ringmagneten 26 stellt eine Information über die Drehlage der Ankerwelle 4 (Abtriebswelle 27) des elektrischen Antriebes zur Verfügung, welche zur Erfassung der Drehzahl der Ankerwelle 4, d. h. des elektrischen Antriebes verwendet werden kann. Mit dieser Information lässt sich eine Auswertung innerhalb einer Schließkraftbegrenzungsroutine durchführen oder eine Positionserfassung der Ankerwelle 4 (Abtriebswelle 27) realisieren.

Fig. 6 ist eine Draufsicht auf die weitere Ausführungsvariante der erfindungsgemäßen Lösung der Bürstenhalteranordnung zu entnehmen.

Aus der Draufsicht gemäß Fig. 6 geht hervor, dass der elektrische Antrieb des Verstellantriebes 1 von einem Polgehäuse 23 umschlossen ist, welches symmetrisch zu seiner Symmetrieachse 35 ausgebildet ist. Das Polgehäuse 23, welches an seiner Innenumfangsfläche in Fig. 6 nicht dargestellte Magnete aufnimmt, umschließt die auf der Ankerwelle 4 (Abtriebswelle 27) aufgebrachte Wicklung bzw. die Wicklungspakete. Das Polgehäuse 23 kann beispielsweise über Befestigungsschrauben mit dem Kunststoffgetriebegehäuse 20 fest verbunden werden. Die Ankerwelle 4 erstreckt sich sowohl durch das Polgehäuse 23 als auch durch das Kunststoffgetriebegehäuse 20, in welchem die Ankerwelle 4 (Abtriebswelle 27) an einer Lagerungsstelle 30 gelagert ist. Das einer Schnecke 28/Schneckenrad 29-Kombination gegenüberliegende Ende der Ankerwelle 4 (Abtriebswelle 27) ist an einem dem Kunststoffgetriebegehäuse 20 gegenüberliegenden Ende des Polgehäuses 23 aufgenommen. Diese Lagerungsstelle ist in Fig. 6 nicht im Detail dargestellt.

In der Darstellung gemäß Fig. 6 sind die Schnittverläufe gemäß der Fig. 4 und 5 dargestellt. Der Schnittverlauf IV-IV stellt den Schnitt durch den auf der Ankerwelle 4 aufgenommenen Kommutator 5 dar, während der Schnittverlauf V-V einen Schnitt durch den Ringmagneten 26, der drehfest auf der Ankerwelle 4 (Abtriebswelle 27) des elektrischen Antriebes des Verstellantriebes 1 aufgebracht ist, darstellt. Aus der Draufsicht gemäß Fig. 6 geht hervor, dass sowohl der Kommutator 5 als auch der Ringmagnet 26 wie auch Lagerungshalbschalen 37 der Lagerungsstelle 30 von der Kunststoffummantelung 34 der geschlossenen Bürstenträgeranordnung 31 tunnelartig umgeben sind. Die Kunststoffummantelung 34 stellt eine Möglichkeit dar, den Verstellantrieb 1 gemäß der Darstellung in Fig. 6 auch ohne Deckel auszuliefern. Die Kunststoffummantelung 34 umschließt die empfindlichen Teile 5, 26, 37 so dass diese gegen Feuchtigkeit und Staub und andere Verschmutzungen gekapselt sind.

In der geschlossenen Bürstenträgeranordnung 31 sind die Kohlebürsten 9 beidseits des Kommutators 5 von der Bürstenführung 21 umgeben. In die Bürstenführungen 21 greifen - analog zur Darstellung gemäß Fig. 3 - hakenförmig gebogene Enden von Schwenkfedern 24 ein, um die Kohlebürste 9 an die Kommutatorlamellen 6 des Kommutators 5 anzustellen. Die Schwenkfedern 24 ihrerseits stützen sich an der Außenseite der Kunststoffummantelung 34 ab. Die geschlossene Bürstenträgeranordnung 31 sowie deren Kunststoffummantelung 34 wird im gleichen Arbeitsgang gespritzt, mit dem auch das Kunststoffgetriebegehäuse 20 gefertigt wird. An der Oberseite der Kunststoffummantelung 34 der geschlossenen Bürstenträgeranordnung 31 befinden sich Aussparungen 32. In die Aussparungen 32, die oberhalb des Ringmagneten 26 in der Kunststoffummantelung 34 ausgeführt sind, können Hall-Sensoren 33 (vergleiche Darstellung gemäß Fig. 5) eingelassen sein. Die Anzahl der Aussparungen 32 auf der Oberseite der Kunststoffummantelung 34 kann der Anzahl der Hall-Sensoren 33, die an der Unterseite der Leiterplatte 14 gemäß der Darstellung in Fig. 5 aufgenommen sind, entsprechen. Die Anzahl der Aussparungen 32 kann auch von der Anzahl der applikationsabhängig eingesetzten Hall-Sensoren 33 abweichen.

Die elektrische Verbindung nach außen wird über der geschlossenen Bürstenträgeranordnung 31 zugeordnete Kohleseile 25 - um ein Beispiel zu erwähnen - realisiert.

Durch das gleichzeitige Fertigen der geschlossenen Bürstenträgeranordnung 31 und des Kunststoffgetriebegehäuses 20 wird eine hochgenaue Platzierung der Kohlebürsten 9 gegenüber dem an der Ankerwelle 4 (Abtriebswelle 27) des Verstellantriebes 1 aufgenommenen Kommutator 5 erreicht. Dies beeinflusst die sich einstellende Geräuschentwicklung am Kommutator 5 sehr günstig. Ferner sind zusätzliche Werkzeuge und Montageschritte zum Einbau eines als separaten Bürstenhalter 8 ausgebildeten zusätzlichen Bauteiles auf der Leiterplatte 14 nicht mehr erforderlich; ein Bürstenträger-Werkzeug kann entfallen. Durch die erfindungsgemäße Lösung lassen sich ferner Schnittstellen einsparen, was die Positionierung der Kohlebürsten 9 in Bezug auf die Lamellen 6 des rotierenden Kommutators 5 günstig beeinflusst. Bei einer unmittelbar an das Kunststoffgetriebegehäuse 20 im gleichen Arbeitsgang angespritzten offenen bzw. geschlossenen Bürstenträgeranordnung 22, 31 führt die genaue Positionierung der Kohlebürsten 9 relativ zu den Kommutatorlamellen 6 des Kommutators 5 zudem zu einer Reduktion des Verschleißes an den Stirnseiten der Kohlebürsten 9, die an die Kommutatorlamellen 6 des Kommutators 5 angestellt sind.

Am Kunststoffgetriebegehäuse 20 ist darüber hinaus ein Gehäusedurchbruch 36 vorgesehen. Durch den Gehäusedurchbruch 36 erstreckt sich die Ankerwelle 4 (Abtriebswelle 27) des elektrischen Antriebs des Verstellantriebs 1. Die Abtriebswelle 27 umfasst eine Schnecke 28, die mit einem in Fig. 6 nur teilweise dargestellten Schneckenrad 29 kämmt. Über diese Getriebeanordnung wird das vom elektrischen Antrieb erzeugte Drehmoment nach außen zum Antrieb einer elektrischen Verstellkomponente, wie beispielsweise eines elektrischen Fensterhebers, genutzt. Aus der Draufsicht gemäß Fig. 6 geht zudem hervor, dass sich die mit dem Kunststoffgetriebegehäuse 20 im selben Arbeitsgang hergestellte geschlossene Bürstenträgeranordnung 31 von der Verbindungsstelle des Polgehäuses 23 mit dem Kunststoffgetriebegehäuse 20 bis zu dessen Gehäusedurchbruch 36 erstreckt. Von der Kunststoffummantelung 34 der geschlossenen Bürstenträgeranordnung 31 sind der Kommutator 5, der Ringmagnet 26 sowie die Lagerschalen 37 der Lagerung 30 der Ankerwelle 4 (Abtriebswelle 27) umschlossen und gegen von außen eindringende Feuchtigkeit sowie sich anlagernden Staub geschützt.

Die einteilige Ausbildung sowohl der offenen Bürstenträgeranordnung 22 als auch der geschlossenen Bürstenträgeranordnung 31 lässt sich gemäß eines weiteren Aspektes mit der vorliegenden Erfindung im Wege des Spritzgießverfahrens herstellen. Dabei kann sowohl im Wege des Kunststoffspritzgießverfahrens die offene Bürstenträgeranordnung 22 als auch die geschlossene Bürstenträgeranordnung 31 an das Getriebegehäuse 20 in einem Arbeitsgang angespritzt werden. Wird die einteilige Ausbildung des Getriebegehäuses 20 - sei es mit einer integrierten offenen Bürstenträgeranordnung 22, sei es mit einer integrierten geschlossenen Bürstenträgeranordnung 31 - im Wege des Kunststoffspritzgießens hergestellt, so kann bei Einsatz unterschiedlicher Kunststoffmaterialien die jeweilige Bürstenträgeranordnung 22, 31 in einem Kunststoffmaterial hergestellt werden, welches vom Kunststoffmaterial, aus welchem das Getriebegehäuse 20 spritzgegossen wird, verschieden ist. Auf diesem Wege lassen sich unterschiedliche Materialpaarungen, was besonders vorteilhaft hinsichtlich der Herstellkosten ist, realisieren. Das Getriebegehäuse 20 wird in der Regel aus einem schlagfesten und bruchunempfindlicheren Kunststoffmaterial hergestellt, verglichen zum Kunststoffmaterial, aus welchem der die Bürstenträgeranordnung 22 bzw. 31 spritzgegossen wird. So lässt sich die in das Getriebegehäuse 20 integrierte Bürstenträgeranordnung 22 bzw. 31 aus einem preiswerteren Spritzgießmaterial, d. h. aus einem preiswerteren Kunststoffmaterial herstellen, verglichen mit dem Kunststoffmaterial, aus welchem das Getriebegehäuse 20 spritzgegossen wird.

### Bezugszeichenliste

- 1: Verstellantrieb
- 2: 1. Gehäusehälfte
- 3: 2. Gehäusehälfte
- 4: Ankerwelle
- 5: Kommutator
- 6: Kommutatorlamellen
- 7: Befestigungsschraube
- 8: Bürstenträger
- 9: Kohlebürste
- 10: Montageclips
- 11: Pins
- 12: Elektronikteil
- 13: Elektronikkomponente
- 14: Leiterplatte

- 20: Kunststoffgetriebegehäuse
- 21: Kohleführung
- 22: offene Bürstenträgeranordnung
- 23: Polgehäuse
- 24: Schwenkfeder
- 25: Kohleseil
- 26: Ringmagnet
- 27: Abtriebswelle
- 28: Schnecke
- 29: Schneckenrad
- 30: Lagerung
- 31: geschlossene Bürstenträgeranordnung
- 32: Aussparung
- 33: Hall-Sensor
- 34: Kunststoffummantelung
- 35: Symmetrieachse
- 36: Gehäusedurchbruch
- 37: Lagerschale

## Patentansprüche

1. Verstellantrieb mit einem Getriebegehäuse (2, 3; 20) aus Kunststoffmaterial, durch das eine Ankerwelle (4) eines elektrischen Antriebes verläuft und auf der Ankerwelle (4) ein Kommutator (5) aufgenommen ist, dem in einem Bürstenträger (8; 22, 31) aufgenommene Bürsten (9) zugeordnet sind, **dadurch gekennzeichnet, dass** die die Bürsten (9) aufnehmende Bürstenträgeranordnung (22, 31) und das Getriebegehäuse 20 aus Kunststoffmaterial einteilig ausgebildet sind.

2. Verstellantrieb gemäß Anspruch 1, **dadurch gekennzeichnet, dass** die Bürstenträgeranordnung (22, 31) an das Getriebegehäuse (20) angespritzt ist.

3. Verstellantrieb gemäß Anspruch 1, **dadurch gekennzeichnet, dass** die Bürstenträgeranordnung als offene, den Kommutator (5) in Umfangsrichtung teilweise umgebender Bürstenträgeranordnung (22) ausgeführt ist.

4. Verstellantrieb gemäß Anspruch 1, **dadurch gekennzeichnet, dass** die Bürstenträgeranordnung als geschlossene, den Kommutator (5) mit einer röhrenförmigen Ummantelung (34) aus Kunststoffmaterial umschließende Bürstenträgeranordnung (31) ausgeführt ist.

5. Verstellantrieb gemäß Anspruch 4, **dadurch gekennzeichnet, dass** die röhrenförmige Ummantelung (34) sowohl den Kommutator (5) als auch einen an der Ankerwelle (4) aufgenommenen Ringmagneten (26) sowie eine Lagerungsstelle (30, 37) der Ankerwelle (4) im Getriebegehäuse (20) umschließt.

6. Verstellantrieb gemäß Anspruch 4, **dadurch gekennzeichnet, dass** an der röhrenförmigen Ummantelung (34) der geschlossenen Bürstenträgeranordnung (31) eine Leiterplatte (14) und/oder weitere Elektronikkomponenten (13) aufgenommen sind.

7. Verstellantrieb gemäß Anspruch 4, **dadurch gekennzeichnet, dass** die röhrenförmige Ummantelung (34) Aussparungen (32) aufweist, in welche mit einer Leiterplatte (14) in Verbindung stehende Hall-Sensoren (33) eingelassen sind.

8. Verstellantrieb gemäß Anspruch 4, **dadurch gekennzeichnet, dass** der Bürstenträgeranordnung (22, 31 ) die Kohlebürsten (9) beaufschlagende Federelemente (24) zugeordnet sind, die sich an der röhrenförmigen Ummantelung (34) abstützen.

9. Verstellantrieb gemäß Anspruch 1, **dadurch gekennzeichnet, dass** das einteilige Getriebegehäuse (20) mit integrierter Bürstenträgeranordnung (22, 31) als Spritzgussteil ausgeführt ist.

10. Verfahren zur Herstellung eines Getriebegehäuses (20) aus Kunststoffmaterial gemäß Anspruch 1, **dadurch gekennzeichnet, dass** die Bürstenträgeranordnung (22, 31) und das Getriebegehäuse (20) in einem Arbeitsgang spritzgegossen werden.

11. Verfahren gemäß Anspruch 10, **dadurch gekennzeichnet, dass** die in einem Arbeitsgang spritzgegossenen Bürstenträgeranordnung (22, 31) und Getriebegehäuse (20) im Wege des 2-komponenten Spritzgießens spritzgegossen werden und die Bürstenträgeranordnung (22, 31) aus einem vom Kunststoffmaterial des Getriebegehäuses (20) verschiedenen Kunststoffmaterial spritzgegossen wird.
